# NEUE EUROPÄISCHE PATENTSCHRIFT

(11) **EP 2 785 547 B2**
(45) Veröffentlichungstag und Bekanntmachung des Hinweises auf die Entscheidung über den Einspruch: **23.09.2020**
(45) Hinweis auf die Patenterteilung: 08.07.2015
(21) Anmeldenummer: 13814538.8
(22) Anmeldetag: 19.12.2013
(51) Int. Cl.: B60J 10/50, B60J 10/74, B60J 10/763, B60J 10/27

(54) **DICHTUNGSPROFIL**
SEALING PROFILE
JOINT D'ÉTANCHÉITÉ PROFILÉ

(30) Priorität: 26.02.2013 DE 102013101896
(43) Veröffentlichungstag der Anmeldung: 08.10.2014
(73) Patentinhaber: Cooper Standard GmbH, 88131 Lindau (DE)
(72) Erfinder: DONIGA-CRIVAT, Mircea, 88131 Lindau (DE); DEMMEL, Thomas, 80935 München (DE)
(74) Vertreter: Flügel Preissner Schober Seidel
(86) Internationale Anmeldenummer: PCT/EP2013/077442
(87) Internationale Veröffentlichungsnummer: WO 2014/131480

(56) Entgegenhaltungen:
- EP-B1- 1 935 694
- JP-A- H0 655 932
- JP-A- H08 318 740

## Beschreibung

Die Erfindung betrifft ein Dichtungsprofil für eine bewegbare Fensterscheibe eines Kraftfahrzeugs.

Bewegbare Fensterscheiben befinden sich heutzutage in zahlreichen Kraftfahrzeugen. Die Abdichtung des Innenraums des Fahrzeugs gegenüber der Fahrzeugumgebung, insbesondere gegen Schall, Wärme/Kälte und Feuchtigkeit, in einer Schließstellung der Scheibe, ist hierbei von großer Bedeutung. Zusätzlich wird von einem Dichtungsprofil gefordert, dass es eine Fensterscheibe eines Kraftfahrzeugs schwingungsgedämpft lagert, so dass auch bei höheren Fahrgeschwindigkeiten keine unerwünschten Geräusche aufgrund einer Vibration der Fensterscheibe auftreten.

EP 1 935 694 B1 offenbart ein Dichtungsprofil zum Abdichten einer Kraftfahrzeugtür gegenüber einer Karosserie eines Kraftfahrzeugs. Hierzu sind mehrere Dichtlippen mit einer Beflockung und eine Bodenlippe, die eine Stirnfläche einer Fensterscheibe des Kraftfahrzeugs in der Schließstellung berührt, vorgesehen. In der Schließstellung liegen die Dichtlippen an den Seitenflächen der Fensterscheibe an, wodurch sie an einer seitlichen Bewegung durch die Dichtlippen gehindert wird. Die Bodenlippe hat eine konvex gekrümmte Kontaktfläche die die Stirnfläche der Fensterscheibe lediglich berührt, aber nicht stabil erfasst. Treten beispielsweise durch den Fahrtwind erzeugte Druckschwankungen auf, so wirkt eine Kraft oder wenigstens eine Kraftkomponente senkrecht zu einer Seitenfläche auf die Fensterscheibe. Diese Kraft muss von den Dichtlippen vollständig aufgenommen werden, um eine Bewegung und somit eine Vibration der Fensterscheibe zu verhindern und eine zuverlässige Abdichtung sicherzustellen. Die Rücktreibenden Kräfte der Dichtlippen, die aufgrund ihrer elastischen Verformung an der Fensterscheibe anliegen, reichen allgemein jedoch nicht aus, die Bewegung und somit eine Vibration der Fensterscheibe zu verhindern. Außerdem bietet die konvexe Kontaktfläche der Stirnfläche keinen Halt, so dass die Fensterscheibe entlang der Bodenlippe rutschen kann. Ein solches Dichtungsprofil ist daher nicht in der Lage eine zuverlässige Abdichtung zu gewährleisten und eine Vibration der Fensterscheibe, mit der unerwünschte Geräuschentwicklung einhergeht, zu verhindern. Ein solches Dichtungsprofil ist auch aus EP 2 222 491 B1 bekannt.

Ein Dichtungsprofil ohne Dichtlippen ist aus EP 1 279 542 B1 bekannt. Hierbei wird ein Abschnitt des Dichtungsprofils von einer Fensterscheibe in einen Hohlraum gedrückt, so dass die Fensterscheibe in einer Schließstellung an ihren beiden Seitenflächen und an der Stirnfläche von diesem Abschnitt umgriffen und festgehalten wird. Aufgrund der in das Dichtungsprofil integrierten Hohlräume kann sich das Dichtungsprofil jedoch elastisch verformen, wobei die Fensterscheibe wieder in Bewegung gerät und Vibrationen und die damit einhergehende unerwünschte Geräuschentwicklung auftritt.

Eine weitere Möglichkeit, eine Fensterscheibe durch ein Dichtungsprofil abzudichten, ist aus DE 102 00 809 A1 ersichtlich. Dieses Dichtungsprofil ist speziell für rahmenlose Türen, beispielsweise an einem Cabriolet, vorgesehen. Die Dichtlippe umgreift die Stirnfläche der Fensterscheibe. Da die Dichtlippe bei diesem Dichtungsprofil senkrecht zu einer Seitenfläche der Fensterscheibe bewegbar ist, kommt die Fensterscheibe in diesem Fall zusammen mit der Dichtlippe in Bewegung, was nicht nur zu unerwünschten Geräuschen führt, sondern in diesem Fall sogar noch zusätzliche sogenannte Schmatzgeräusche nach sich zieht. Diese entstehen beim Lösen zweier Oberflächen aus elastomerem Werkstoff, die zuvor aneinander gepresst worden sind.

Darüber hinaus offenbart JP H08 318740 A einen Dichtstreifen für eine Fensterscheibe eines Kraftfahrzeugs, der einen Aufnahmeabschnitt umfasst, der im Querschnitt im Wesentlichen U-förmig ist und zwei Schenkel aufweist. Die beiden Schenkel sind durch eine Basis miteinander verbunden. An der Basis ist eine Bodenlippe vorgesehen. Ein erstes Ende der Bodenlippe ist an der Basis angeformt und ein zweites Ende der Bodenlippe ist frei und beweglich. Die eben ausgebildete Kontaktfläche der Bodenlippe berührt im Schließzustand die Stirnseite einer Fensterscheibe. Ein Stützabschnitt ist ebenfalls an der Basis vorgesehen. Der Stützabschnitt ist ausgebildet, die Bodenlippe in der Schließstellung an der Basis abzustützen. Zwei Dichtlippen sind an den beiden Schenkeln angeordnet. Im Schließzustand wird die Bodenlippe zu der Basis hin verformt und verkrümmt.

Aus JP H06 55932 A geht ein Dichtstreifen hervor, der einen im Querschnitt im Wesentlichen U-förmigen Aufnahmeabschnitt aufweist. Der Aufnahmeabschnitt umfasst einen ersten Schenkel, einen zweiten Schenkel sowie eine den ersten und zweiten Schenkel verbindende Basis. Eine Glasabdeckung ist mit dem ersten und zweiten Schenkel verbunden. Die Glasabdeckung weist eine Glasaufnahmefläche auf. Eine Hemmrippe ist angrenzend an die Glasaufnahmefläche vorgesehen. In der Schließstellung wird die Glasabdeckung zu der Basis hin verkrümmt. Die Glasabdeckung berührt dann die Stirnseite der Scheibe.

JP 2010 52462 A offenbart ein Dichtungsprofil für eine Fensterscheibe eines Kraftfahrzeugs, das einen Aufnahmeabschnitt umfasst, der im Wesentlichen U-förmig ausgebildet ist und einen ersten Schenkel, einen zweiten Schenkel und eine Basis aufweist. Eine Bodenlippe ist mit einem ersten Ende an der Basis angeordnet. Ein zweites Ende der Bodenlippe ist frei und beweglich. Die Bodenlippe hat eine gekrümmte Kontaktfläche. Die Kontaktfläche ist zwischen dem ersten und dem zweiten Ende angeordnet und berührt im Schließzustand die Stirnfläche der Fensterscheibe. Ein Stützvorsprung ist an dem zweiten Ende der Bodenlippe zwischen der Bodenlippe und der Basis vorgesehen. Der Stützvorsprung vermag die Bodenlippe in der Schließstellung an der Basis abzustützen. Im Schießzustand liegt die Bodenlippe lediglich an der Stirnfläche der Fensterscheibe an, und es wird ein Hohlraum durch die Bodenlippe, die Basis sowie den Stützvorsprung begrenzt.

Eine bei einem Kraftfahrzeug Anwendung findende Dichtung, die einen Aufnahmeabschnitt, der im Querschnitt im Wesentlichen U-förmig ist, umfasst, wird in GB 2 462 271 A beschrieben. Ein erster Schenkel, ein zweiter Schenkel und eine Basis bilden den Aufnahmeabschnitt. Eine Bodenlippe weist ein erstes Ende und ein zweites Ende auf. Das erste Ende ist an dem ersten Schenkel angeordnet. Das zweite Ende ist frei und beweglich. Eine Kontaktfläche ist zwischen dem ersten und dem zweiten Ende angeordnet und berührt im Schließzustand die Stirnfläche der Fensterscheibe. Eine erste Dichtlippe ist an dem ersten Schenkel vorgesehen und eine zweite Dichtlippe ist an dem zweiten Schenkel vorgesehen. Die erste Dichtlippe weist einen ersten Dichtabschnitt, der an die erste Seitenfläche anlegbar ist, auf. Die zweite Dichtlippe weist einen zweiten Dichtabschnitt, der an die zweite Seitenfläche anlegbar ist, auf. Der erste und zweite Dichtabschnitt sind mit einem reibungsmindernden Überzug beschichtet.

Weitere Dichtungen, die einen im Querschnitt U-förmigen Aufnahmeabschnitt aufweisen, werden in WO 2006/042492 A1, DE 10 2008 053 870 A1 und DE 10 2009 053 937 A1 beschrieben.

Der Erfindung liegt die Aufgabe zugrunde, ein Dichtungsprofil für eine Fensterscheibe eines Kraftfahrzeugs zu schaffen, das eine zuverlässige Abdichtung ermöglicht und unerwünschte Geräusche, die mit einer Vibration der Fensterscheibe während der Fahrt einhergehen, verhindert.

Der Erfindung liegt die Erkenntnis zugrunde, dass eine Bewegung der Fensterscheibe senkrecht zu einer Tangentialebene der Seitenflächen verhindert wird, wenn die Fensterscheibe in einer Nominal- oder Konstruktionslage stabilisiert wird. Ein Dichtungsprofil mit den Merkmalen des Anspruchs 1 macht diese Erkenntnis nutzbar. Vorteilhafte Ausgestaltungen der Erfindung sind Gegenstand der Ansprüche 2 bis 11.

Ein Dichtungsprofil entsprechend einer Ausführungsform der Erfindung, ist für eine Fensterscheibe eines Kraftfahrzeugs, die zwischen einer Offenstellung und einer Schließstellung verschiebbar ist, und eine erste Seitenfläche, eine zweite Seitenfläche und eine Stirnfläche aufweist, gedacht. Das Dichtungsprofil hat einen Aufnahmeabschnitt, der im Querschnitt im Wesentlichen U-förmig ist sowie einen ersten Schenkel, einen zweiten Schenkel und eine Basis, die den ersten und zweiten Schenkel miteinander verbindet. Eine Bodenlippe, die ein erstes Ende hat, das an dem ersten Schenkel angeordnet ist, ein zweites Ende hat, das frei ist, und eine gekrümmte Kontaktfläche hat, die zwischen dem ersten und dem zweiten Ende angeordnet ist und die Stirnfläche der Fensterscheibe in der Schließstellung formschlüssig umgreift, ist in einem solchen Dichtungsprofil enthalten. Der Stützabschnitt, der zwischen der Bodenlippe und der Basis vorgesehen ist, dient dazu, die Bodenlippe in der Schließstellung an der Basis abzustützen. Dabei weist die Bodenlippe einen ersten Nockenabschnitt auf, der an die Kontaktfläche angrenzt und dazu dient, die Fensterscheibe am Bewegen in einer Richtung senkrecht zu einer Tangentialebene der Seitenfläche zu hindern.

Bei einem solchen Dichtungsprofil ist die Fensterscheibe des Kraftfahrzeugs in der Schließstellung in dem Aufnahmeabschnitt aufgenommen. Die Bodenlippe wird durch den Stützabschnitt gegenüber der Basis abgestützt und durch die Fensterscheibe in Richtung der Basis gedrängt. Als Folge umgreift die Kontaktfläche die Fensterscheibe und der erste Nockenabschnitt erfasst die Fensterscheibe seitlich, wobei ein Formschluss zwischen der Bodenlippe und der Fensterscheibe entsteht. Die Fensterscheibe ist somit nicht mehr in der Lage, sich in eine Richtung senkrecht zu einer Tangentialebene einer Seitenfläche zu bewegen. Dadurch kann die Fensterscheibe zuverlässig abgedichtet und das entstehen von unerwünschten Geräuschen, die mit einer Vibration der Fensterscheibe einhergehen, verhindert werden. Bevorzugt ist der Stützabschnitt an der Basis angeordnet. Alternativ hierzu ist der Stützabschnitt an der Bodenlippe angeordnet. Vorzugsweise grenzt der Stützabschnitt auf der der Kontaktfläche abgewandten Seite an den ersten Nockenabschnitt.

Durch die bevorzugte Anordnung des Stützabschnitts, wird der Formschluss verstärkt, da die Bodenlippe stärker in Richtung der Basis gedrängt und so stärker verkrümmt wird. Folglich umgreift die Kontaktfläche die Stirnfläche vollständig und der erste Nockenabschnitt wird an eine Seitenfläche der Scheibe anlegt. Der Nockenabschnitt hindert die Fensterscheibe an einer Bewegung, da die Fensterscheibe in der Nominal- oder Konstruktionslage zusätzlich stabilisiert ist. Auf diese Weise kann eine zuverlässige Abdichtung gewährleistet und das Entstehen unerwünschter Geräusche aufgrund einer Vibration der Fensterscheibe verhindert werden.

Weiter bevorzugt ist die Kontaktfläche konkav gekrümmt. Durch die konkave Krümmung der Bodenlippe wird der Formschluss weiter verstärkt und die Fensterscheibe weiter in der Konstruktionslage stabilisiert.

Erfindungsgemäßbegrenzen die Bodenlippe, die Basis, der erste Schenkel und der Stützabschnitt in der Schließstellung einen Hohlraum. Durch den Hohlraum ist die Bodenlippe in der Lage sich elastisch federnd zu bewegen und Vibrationen der Fensterscheibe aufzunehmen. Die Fensterscheibe ist dadurch zusätzlich schwingungsgedämpft gelagert.

Bei einer weiteren bevorzugten Ausführungsform umfasst die Bodenlippe einen zweiten Nockenabschnitt, der an die Kontaktfläche angrenzt. Der zweite Nockenabschnitt ist vorzugsweise an dem, dem ersten Nockenabschnitt abgewandten, Ende der Bodenlippe angeordnet.

Bei einem solchen Dichtungsprofil wird die Bewegung der Fensterscheibe auch in eine andere Richtung senkrecht zu einer Tangentialebene der Fensterscheibe verhindert. Die Fensterscheibe ist dadurch in einer Konstruktions- oder Nominallage stabilisiert. Folglich kann die Fensterscheibe zuverlässig Abgedichtet werden. Zusätzlich ist die Schwingungsdämpfung erheblich verbessert, wodurch unerwünschte Geräusche verhindert werden können.

Vorzugsweise ist die Kontaktfläche aufgeraut, beschichtet oder aus einem Reibmaterial gefertigt, damit die Kontaktfläche die Stirnfläche der Fensterscheibe zusätzlich kraftschlüssig (reibschlüssig) erfasst. Eine Bewegung der Fensterscheibe wird durch den zusätzlichen Kraftschluss (Reibschluss) zusätzlich erschwert. Zusätzlich werden Vibrationen der Fensterscheibe besser von der Bodenlippe aufgenommen, was das Auftreten von unerwünschten Geräuschen verhindert.

Das Dichtungsprofil umfasst besonders bevorzugt eine erste Dichtlippe, die an dem ersten Schenkel angeordnet ist, und eine zweite Dichtlippe, die an dem zweiten Schenkel angeordnet ist. Durch die beiden zusätzlichen Dichtlippen wird die Fensterscheibe an einer Bewegung senkrecht zu einer Tangentialebene ihrer Seitenfläche gehindert. Die Fensterscheibe wird dabei in der Konstruktionslage stabilisiert und das Entstehen von unerwünschten Geräuschen verhindert. Zusätzlich kann eine zuverlässige Abdichtung der Fensterscheibe gewährleistet werden.

Es ist bevorzugt, dass die erste Dichtlippe einen, vorzugsweise reibungsmindernd ausgebildeten oder beflockten, ersten Dichtabschnitt, der an die erste Seitenfläche anlegbar ist, umfasst.

Es ist bevorzugt, dass die zweite Dichtlippe einen, vorzugsweise reibungsmindernd ausgebildeten oder beflockten, zweiten Dichtabschnitt, der an die zweite Seitenfläche anlegbar ist, umfasst.

Die Beflockung der Dichtabschnitte erlaubt es der Fensterscheibe leicht in den oder aus dem Aufnahmeabschnitt bei einer Schließ- oder Öffnungsbewegung zu gleiten. Außerdem wird die Fensterscheibe zuverlässig abgedichtet und durch den zusätzlichen Formschluss das Entstehen unerwünschter Geräusche verhindert.

Erfindungsgemäßist wenigstens ein Vorsprung an der Basis angeordnet, der ein vollflächiges Anlegen der Bodenlippe an die Basis verhindert. Wenn die Bodenlippe durch die Fensterscheibe gegen die Basis gedrückt wird, können die Bodenlippe und die Basis aneinander haften. Beim Öffnen treten dann sogenannte Schmatzgeräusche auf, wenn sich die Bodenlippe wieder von der Basis löst. Der wenigstens eine Vorsprung verhindert ein großflächiges anlegen der Bodenlippe an die Basis und somit das Auftreten der Schmatzgeräusche.

Bevorzugt ist das Dichtungsprofil aus einem Elastomer gefertigt. Es ist besonders bevorzugt, dass das Elastomer ist ein thermplastisches Elastomer oder alternativ ein Ethylen-Propylen-Dien-Kautschuk ist. Das Dichtungsprofil ist bevorzugt extrudiert.

Weiter bevorzugt umfasst das Dichtungsprofil entsprechend der vorliegenden Erfindung ein Zierelement oder eine Zierleiste. Dabei ist das Zierelement vorzugsweise aus einem Metall, wie etwa Aluminium, oder alternativ aus einer Aluminiumlegierung gefertigt.

Durch die bevorzugte Ausgestaltung des Dichtungsprofils wird die Fensterscheibe in der Nominal- oder Konstruktionslage stabilisiert. Dies führt zu einer zuverlässigen Abdichtung des Innenraums des Fahrzeugs gegenüber der Fahrzeugumgebung hinsichtlich Schall, Wärme und Feuchtigkeit unabhängig von der Fahrgeschwindigkeit des Fahrzeugs. Zusätzlich ist die Fensterscheibe schwingungsgedämpft gelagert, wodurch unerwünschte Geräusche während der Fahrt verhindert werden.

Richtungsangaben in der Beschreibung, wie "innen", "außen", "rechts", "links", "vorne", "hinten", "oben" und "unten" beziehen sich auf die Sichtweise einer in dem Fahrzeug sitzenden Person mit Blick in Richtung auf die Windschutzscheibe.

Ein Ausführungsbeispiel der Erfindung wird nachfolgend anhand der beigefügten Zeichnungen erläutert. Darin zeigen:
- Fig. 1: eine seitliche Teilansicht eines Kraftfahrzeugs;
- Fig. 2: einen Querschnitt eines Ausführungsbeispiels eines Dichtungsprofils mit einer Fensterscheibe (Nominallage gestrichelt) in einer Offenstellung; und
- Fig. 3: einen Querschnitt des Ausführungsbeispiels des Dichtungsprofils mit der Fensterscheibe in einer Schließstellung (gestrichelt).

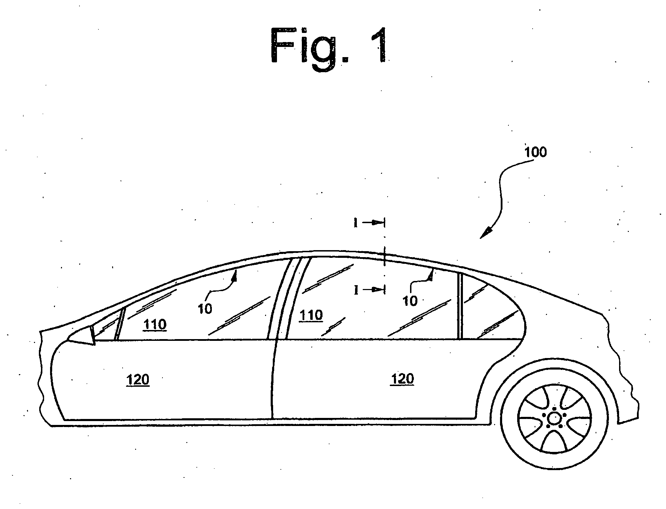

Wie aus Fig. 1 ersichtlich, umfasst ein Kraftfahrzeug 100 eine Fensterscheibe 110, eine Tür 120 und ein Dichtungsprofil 10. Das Dichtungsprofil 10 ist an der Oberseite der Tür 120 des Kraftfahrzeugs 100 angeordnet.

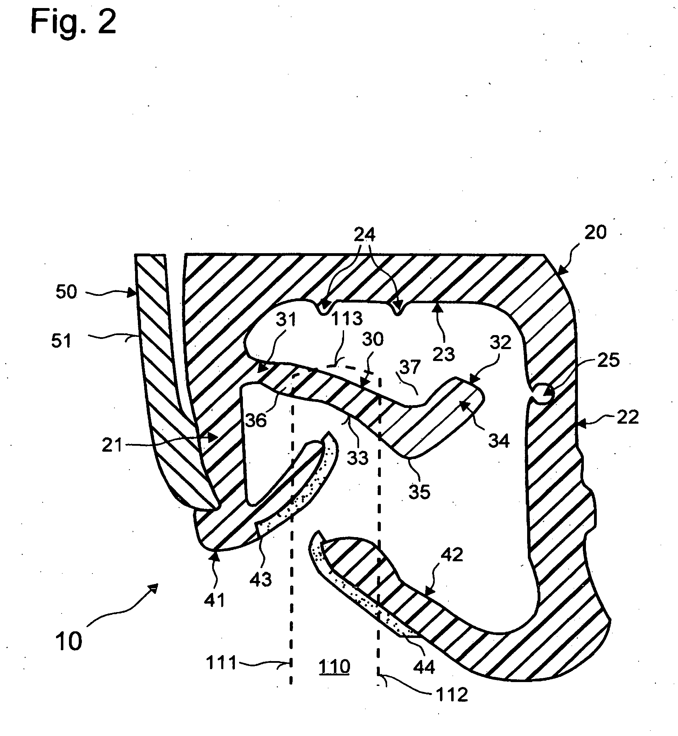

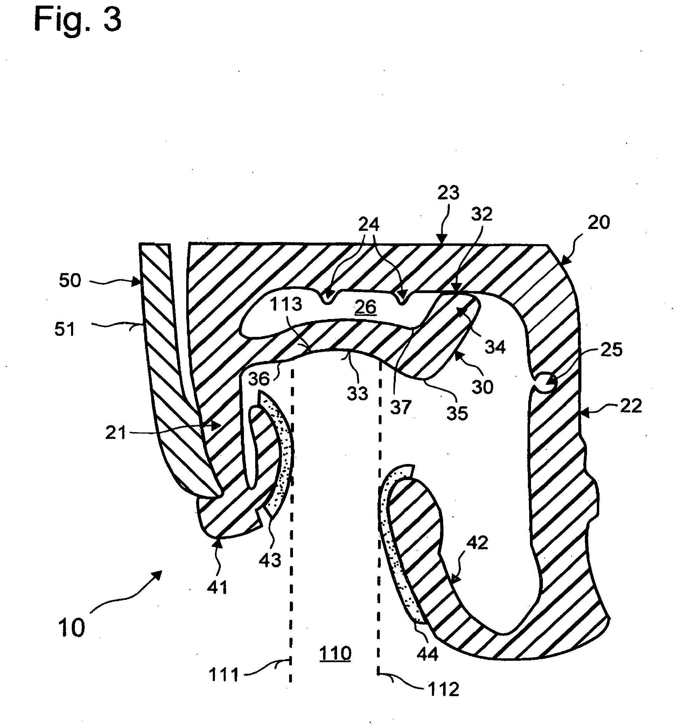

Wie aus den Fig. 2 und 3 ersichtlich, weist die Fensterscheibe 110 eine erste Seitenfläche 111 (äußere Seitenfläche), eine zweite Seitenfläche 112 (innere Seitenfläche) und eine Stirnfläche (Oberseite) 113 auf. Die Nominal- oder Konstruktionslage der Fensterscheibe 110 ist in den Fig. 2 und 3 gestrichelt dargestellt. Das Dichtungsprofil 10 wird im Folgenden unter Zuhilfenahme eines Schnitts entlang der Linie I-I (Fig. 1) näher erläutert.

Das Dichtungsprofil 10 ist aus einem Ethylen-Propylen-Dien-Kautschuk extrudiert und umfasst einen Aufnahmeabschnitt 20, eine Bodenlippe 30, eine erste Dichtlippe 41, eine zweite Dichtlippe 42 und ein Zierelement 50. Der Aufnahmeabschnitt 20 umfasst einen ersten Schenkel 21, einen zweiten Schenkel 22 und eine Basis 23. Die beiden Schenkel 21, 22 sowie die Basis 23 sind so angeordnet, dass sie einen im Wesentlichen U-förmigen Querschnitt bilden.

In der Schließstellung nimmt der Aufnahmeabschnitt 20 die Stirnfläche 113 und einen Teil Fensterscheibe 110 in sich auf. Die Fensterscheibe 110 befindet sich dann zwischen den beiden Schenkeln 21, 22. Außerdem wird ein Hohlraum 26 gebildet, der von der Bodenlippe 30, dem ersten Schenkel 21, der Basis 23 und einem Stützabschnitt 34 (weiter unten beschrieben) begrenzt ist. In der Offenstellung befindet sich die Fensterscheibe 110 vollständig außerhalb des Aufnahmeabschnitts 20.

Der erste Schenkel 21 hat einen Bereich, an dem das Zierelement 50 befestigt werden kann, und einen Bereich an dem die Bodenlippe 30 angeordnet ist. Der zweite Schenkel 22 weist eine darin angeordnete Nut 25 auf, die sich entlang des gesamten Dichtungsprofils 10 erstreckt. Die Nut 25 erlaubt ein Knicken des zweiten Schenkels 22, damit das Dichtungsprofil 10 in einer entsprechenden Aufnahme (nicht gezeigt) an der Tür 120 befestigt werden kann.

Die Basis 23 hat einen Endabschnitt, an dem ein Ende des ersten Schenkels 21 angeordnet ist, und einen anderen Endabschnitt, an dem ein Ende des zweiten Schenkels 22 angeordnet ist. Die Basis 23 verbindet auf diese Weise die beiden Schenkel 21, 22. Wenigstens ein Vorsprung 24 (hier zwei Vorsprünge), der von einer unteren Fläche der Basis 23 in Richtung der Bodenlippe 30 vorspringt, ist vorgesehen. Die Vorsprünge 24 verhindern, dass die Bodenlippe 30 durch die Fensterscheibe 110 vollständig an die Basis 23 gedrückt wird. Beim Öffnen der Fensterscheibe 110 bewegt sich die Bodenlippe 30 ohne sich von der Basis 23 lösen zu müssen. Dadurch wird ein unerwünschtes Geräusch, das mit diesem Lösevorgang einhergeht, vermieden.

Die Bodenlippe 30 umfasst ein erstes Ende 31, ein zweites Ende 32, eine Kontaktfläche 33, einen Stützabschnitt 34, einen ersten Nockenabschnitt 35, einen zweiten Nockenabschnitt 36 und eine Ausbauchung 37. Das erste Ende 31 der Bodenlippe 30 ist beispielsweise an dem ersten Schenkel 22 angeordnet. Das zweite Ende 32 der Bodenlippe 30 ist ein freies Ende, d.h. das zweite Ende 32 wird bewegt, wenn die Bodenlippe bewegt wird, während das erste Ende bis auf eine Gelenk- oder Drehbewegung stationär bleibt.

Die Kontaktfläche 33 ist zwischen dem ersten Ende 31 und dem zweiten Ende 32 angeordnet und konkav gekrümmt. Der Stützabschnitt 34 wird bei diesem Ausführungsbeispiel der vorliegenden Erfindung von dem zweiten Ende 32 gebildet, kann aber auch als ein selbständiges Teil gebildet sein. Der erste Nockenabschnitt 35 ist an dem zweiten Ende 32 der Bodenlippe 30 angeordnet und grenzt an die Kontaktfläche 33. Bei dem ersten Nockenabschnitt 35 ist auf der, der Basis 23 zugewandten Seite der Bodenlippe 30 die Ausbauchung 37 angeordnet. Die Bodenlippe 30 ist daher bei diesem Ausführungsbeispiel L-förmig ausgebildet. Der zweite Nockenabschnitt 36 befindet sich in der Nähe des ersten Endes 31 und grenzt an das erste Ende 31 und die Kontaktfläche 33 an.

Der Stützabschnitt 34 ist an dem zweiten Ende 32 der Bodenlippe 30 angeordnet und stützt in der Schließstellung die Bodenlippe 30 an der Basis 23 ab. Befindet sich die Fensterscheibe 110 in der Schließstellung (siehe Fig. 3), ist die Bodenlippe 30 in Richtung der Basis 23 gedrückt. Weil die Bodenlippe 30 durch den Stützabschnitt 34 abgestützt ist, wird sie ebenso in Richtung der Basis 23 verkrümmt. Die Kontaktfläche 33 wird dabei von der Stirnfläche 113 der Fensterscheibe 110 ebenso konkav verkrümmt. Durch die Verkrümmung der Kontaktfläche 33 stülpen sich der erste Nockenabschnitt 35 und der zweite Nockenabschnitt 36 um die Stirnfläche 113 und liegen an den beiden Seitenflächen 111, 112 an. Der erste Nockenabschnitt 35 und der zweite Nockenabschnitt 36 verhindern so eine Bewegung der Fensterscheibe 110 in eine Richtung senkrecht zu einer Tangentialebene der Seitenfläche 111, 112. Die Fensterscheibe 110 wird somit formschlüssig erfasst und in ihrer Nominallage stabilisiert und gehalten.

Der Hohlraum 26 ist luftgefüllt und lagert die Fensterscheibe 110 schwingungsgedämpft, da sich die Bodenlippe 30 im Fall von Vibrationen der Fensterscheibe 110 elastisch verformen und die Bewegung der Fensterscheibe 110 aufnehmen kann. Die erste Dichtlippe 41 mit einem ersten Dichtabschnitt 43 und die zweite Dichtlippe 42 mit einem zweiten Dichtabschnitt 44 sind bei diesem Ausführungsbeispiel jeweils an dem ersten und zweiten Schenkel 21 ,22 angeordnet. Die beiden Dichtabschnitte 43, 44 sind dabei durch Beflocken gebildet.

In der Schließstellung (Fig. 3) werden die beiden Dichtlippen 41, 42 von der Fensterscheibe 110 elastisch verformt. Wenn nun eine Kraft auf die Fensterscheibe 110, beispielsweise aufgrund von Druckschwankungen, wirkt, können die Dichtlippen 41, 42 diese aufnehmen und die Fensterscheibe 110 in ihrer Konstruktionslage halten. Die beflockten Dichtabschnitte 43, 44 sorgen dabei für eine zuverlässige Abdichtung.

Das Zierelement 50 ist bei aus Aluminium und hat eine glänzende Oberfläche 51. Das Zierelement 50 ist an dem ersten Schenkel 21 durch eine Klemmverbindung befestigt. Die Oberfläche 51 dient der angenehmen ästhetischen Gestaltung des Dichtungsprofils 10 für einen äußeren Betrachter des Kraftfahrzeugs 100.

Das Dichtungsprofil 10 dichtet den Innenraum des Fahrzeugs zuverlässig gegenüber der Umgebung des Fahrzeugs ab, da die spezielle Form der Bodenlippe 30 die Bewegung der Fensterscheibe 110 in eine Richtung nach innen oder außen verhindert. Die Fensterscheibe 110 wird zusätzlich zu dem Formschluss zwischen der Bodenlippe 30 und den Stirn- und Seitenflächen 111, 112, 113 mittel der beiden Dichtlippen 41, 42 in ihrer Konstruktionslage stabilisiert und gehalten. Durch die Elastizität des Werkstoffs und den in der Schließstellung gebildeten Hohlraum 26 ist die Fensterscheibe 110 auch schwingungsgedämpft gelagert. Von einer Vibration der Fensterscheibe 110 herrührende Geräusche können so vermieden werden.

### Bezugszeichenliste:

- 10: Dichtungsprofil

- 20: Aufnahmeabschnitt
- 21: erster Schenkel
- 22: zweiter Schenkel
- 23: Basis
- 24: Vorsprung
- 25: Nut
- 26: Hohlraum

- 30: Bodenlippe
- 31: erstes Ende
- 32: zweites Ende
- 33: Kontaktfläche
- 34: Stützabschnitt
- 35: erster Nockenabschnitt
- 36: zweiter Nockenabschnitt
- 37: Ausbauchung

- 41: erste Dichtlippe
- 42: zweite Dichtlippe
- 43: ersten Dichtabschnitt
- 44: zweiten Dichtabschnitt

- 50: Zierelement
- 51: Oberfläche
- 100: Kraftfahrzeug

- 110: Fensterscheibe
- 111: erste Seitenfläche
- 112: zweite Seitenfläche
- 113: Stirnfläche

- 120: Tür

## Patentansprüche

1. Dichtungsprofil (10) für eine Fensterscheibe (110) eines Kraftfahrzeugs (100), die zwischen einer Offenstellung und einer Schließstellung verschiebbar ist, und eine erste Seitenfläche (111), eine zweite Seitenfläche (112) und eine Stirnfläche (113) aufweist, umfassend:
einen Aufnahmeabschnitt (20), der im Querschnitt im Wesentlichen U-förmig ist und einen ersten Schenkel (21), einen zweiten Schenkel (22) und eine den ersten und zweiten Schenkel (21, 22) miteinander verbindende Basis (23) aufweist;
eine Bodenlippe (30), die ein erstes Ende (31), das an dem ersten Schenkel (21) angeordnet ist, und ein zweites Ende (32), das frei ist, aufweist, und
einen Stützabschnitt (34), der zwischen der Bodenlippe (30) und der Basis (23) vorgesehen und dazu ausgebildet ist, die Bodenlippe (30) in der Schließstellung an der Basis (23) abzustützen;
**dadurch gekennzeichnet, dass** die Bodenlippe (30) eine gekrümmte Kontaktfläche (33), die zwischen dem ersten und dem zweiten Ende (31, 32) angeordnet ist und die Stirnfläche (113) der Fensterscheibe (110) in der Schließstellung formschlüssig umgreift, aufweist;
wobei die Bodenlippe (30), die Basis (23), der erste Schenkel (21) und der Stützabschnitt (34) in der Schließstellung einen Hohlraum (26) begrenzen;
wobei die Bodenlippe (30) einen ersten Nockenabschnitt (35) aufweist, der an die Kontaktfläche (33) angrenzt und dazu ausgebildet ist, die Fensterscheibe (110) am Bewegen in einer Richtung senkrecht zu einer Tangentialebene der Seitenfläche (111, 112) zu hindern,und
dass wenigstens ein Vorsprung (24) vorgesehen ist, der an der Basis (23) angeordnet ist, um ein vollflächiges Anlegen der Bodenlippe (30) an die Basis (23) zu verhindern.

2. Dichtungsprofil (10) nach Anspruch 1, **dadurch gekennzeichnet, dass** der Stützabschnitt (34) an der Basis (23) angeordnet ist.

3. Dichtungsprofil (10) nach Anspruch 1, **dadurch gekennzeichnet, dass** der Stützabschnitt (34) an der Bodenlippe (30) angeordnet ist.

4. Dichtungsprofil (10) nach Anspruch 3, **dadurch gekennzeichnet, dass** der Stützabschnitt (34) auf der der Kontaktfläche (33) abgewandten Seite an den ersten Nockenabschnitt (35) grenzt.

5. Dichtungsprofil (10) nach einem der Ansprüche 1 bis 4, **dadurch gekennzeichnet, dass** die Kontaktfläche (33) konkav gekrümmt ist.

6. Dichtungsprofil (10) nach einem der Ansprüche 1 bis 5, **dadurch gekennzeichnet, dass** die Bodenlippe (30) einen zweiten Nockenabschnitt (36) umfasst, der an die Kontaktfläche (33) angrenzt und an dem, dem ersten Nockenabschnitt (35) abgewandten Ende (31, 32) der Bodenlippe (30) angeordnet ist.

7. Dichtungsprofil (10) nach einem der Ansprüche 1 bis 6, **dadurch gekennzeichnet, dass** die Kontaktfläche (33) aufgeraut oder beschichtet oder aus einem Reibmaterial gefertigt ist, um die Stirnfläche (113) der Fensterscheibe (110) zusätzlich kraftschlüssig zu halten.

8. Dichtungsprofil (10) nach einem der Ansprüche 1 bis 7, **gekennzeichnet durch** eine erste Dichtlippe (41), die an dem ersten Schenkel (21) angeordnet ist, und eine zweite Dichtlippe (42), die an dem zweiten Schenkel (22) angeordnet ist.

9. Dichtungsprofil (10) nach Anspruch 8, **dadurch gekennzeichnet,**
**dass** die erste Dichtlippe (41) einen, vorzugsweise reibungsmindernd ausgebildeten oder beflockten, ersten Dichtabschnitt (43), der an die erste Seitenfläche (111) anlegbar ist, umfasst, und/oder
**dass** die zweite Dichtlippe (42) einen, vorzugsweise reibungsmindernd ausgebildeten oder beflockten, zweiten Dichtabschnitt (44), der an die zweite Seitenfläche (112) anlegbar ist, umfasst.

10. Dichtungsprofil (10) nach einem der Ansprüche 1 bis 9, **dadurch gekennzeichnet, dass** das Dichtungsprofil (10) aus einem Elastomer, vorzugsweise einem thermoplastischen Elastomer oder einem Ethylen-Propylen-Dien-Kautschuk, gefertigt, vorzugsweise extrudiert, ist.

11. Dichtungsprofil (10) nach einem der Ansprüche 1 bis 10, **gekennzeichnet durch** ein Zierelement (50), das an dem ersten oder zweiten Schenkel (21,22) angeordnet und vorzugsweise aus Metall, Aluminium oder einer Aluminiumlegierung gefertigt ist.

## Claims

1. A sealing profile (10) for a windowpane (110) of a motor vehicle (100), wherein the windowpane is displaceable between an open position and a closed position, and has a first lateral surface (111), a second lateral surface (112) and a front face (113), comprising:
a receiving section (20), which essentially is U-shaped in cross section and a first leg (21), a second leg (22) and a base (23) connecting the first leg and second leg (21, 22) to each other;
a bottom lip (30) which has a first end (31) which is arranged at the first leg (21), and has a second end (32) which is free, and
a supporting section (34), which is provided between the bottom lip (30) and the base (23) and which, in the closed position, is form to support the bottom lip (30) at the base (23);
**characterized in that** the bottom lip (30) comprises a curved contact surface (33), which is arranged between the first and the second end (31, 32) and which form-fittingly encompasses the front face (113) of the windowpane (110) in the closed position;
wherein the bottom lip (30), the base (23), the first leg (21) and the supporting section (34) enclose a cavity (26) in the closed position;
wherein the bottom lip (30) has a first cam section (35), which is adjacent to the contact surface (33) and is formed to prevent the windowpane (110) from moving in a direction perpendicular to a tangent plane of the lateral surface (111, 112), and
that at least one projection (24) is provided, which is arranged at the base (23) in order to prevent a full-surface contact of the bottom lip (30) on the base (23).

2. The sealing profile (10) according to claim 1, **characterized in that** the supporting section (34) is arranged at the base (23).

3. The sealing profile (10) according to claim 1, **characterized in that** the supporting section (34) is arranged at the bottom lip (30).

4. The sealing profile (10) according to claim 3, **characterized in that** the supporting section (34) is adjacent to the first cam section (35) at the side facing away from the contact surface (33).

5. The sealing profile (10) according to one of the claims 1 to 4, **characterized in that** the contact surface (33) is concavely curved.

6. The sealing profile (10) according to one of the claims 1 to 5, **characterized in that** the bottom lip (30) comprises a second cam section (36), which is adjacent to the contact surface (33) and is arranged an at the end (31, 32) of the bottom lip (30) facing away from the first cam section (35).

7. The sealing profile (10) according to one of the claims 1 to 6, **characterized in that** the contact surface (33) is roughened or coated or is fabricated of a friction material to additionally hold the front face (113) of the windowpane (110) in a force-fitting manner.

8. The sealing profile (10) according to one of the claims 1 to 7, **characterized by** a first sealing lip (41), which is arranged at the first leg (21), and a second sealing lip (42), which is arranged at the second leg (22).

9. The sealing profile (10) according to claim 8, **characterized in that** the
first sealing lip (41) comprises a first sealing section (43), which preferably is formed in a friction reducing manner or is flocked and is applicable to the first lateral surface (111), and/or
**in that** the second sealing lip (42) comprises a second sealing section (44), which preferably is formed in a friction-reducing manner or is flocked and is applicable to the second lateral surface (112).

10. The sealing profile (10) according to one of the claims 1 to 9, **characterized in that** the sealing profile (10) is fabricated, and preferably is extruded, from an elastomer, preferably a thermoplastic elastomer or an ethylene propylene diene rubber.

11. The sealing profile (10) according to one of the claims 1 to 10, **characterized by** a decorative element (50) which is arranged at the first or second leg (21,22) and preferably is fabricated from metal, aluminum or an aluminum alloy.

## Revendications

1. Profilé d'étanchéité (10) pour une vitre de fenêtre (110) d'un véhicule automobile (100), qui est déplaçable entre une position ouverte et une position fermée, et qui comprend une première surface latérale (111), une seconde surface latérale (112) et une surface frontale (113), comprenant :
un tronçon de réception (20) qui a en section transversale sensiblement une forme en U et comporte une première branche (21), une seconde branche (22), et une base (23) qui relie l'une à l'autre la première et la seconde branche (21, 22),
une lèvre de fond (30), qui comporte une première extrémité (31), qui est agencée sur la première branche (21), et une seconde extrémité (32), qui est libre, et
un tronçon de soutien (34), qui est prévu entre la lèvre de fond (30) et la base (23) et qui est réalisé pour soutenir la lèvre de fond (30) dans la position fermée contre la base (23) ;
**caractérisé en ce que** la lèvre de fond (30) comprend une surface de contact incurvée (33), qui est agencée entre la première et la seconde extrémité (31, 32) et qui enserrent en coopération de formes la surface frontale (113) de la vitre de fenêtre (110) dans la position fermée ;
dans lequel la lèvre de fond (30), la base (23), la première branche (21) et le tronçon de soutien (34) délimitent une cavité (26) dans la position fermée ;
dans lequel la lèvre de fond (30) comporte un premier tronçon formant came (35), qui est adjacent à la surface de contact (33) et qui est réalisé pour empêcher à la vitre de fenêtre (110) de se déplacer dans une direction perpendiculaire à un plan tangentiel de la surface latérale (111, 112), et
**en ce qu'**au moins une saillie (24) est prévue, qui est agencée sur la base (23), afin d'empêcher le contact sur toute la surface de la lèvre de fond (30) sur la base (23).

2. Profilé d'étanchéité (10) selon la revendication 1, **caractérisé en ce que** le tronçon de soutien (34) est agencé sur la base (23).

3. Profilé d'étanchéité (10) selon la revendication 1, **caractérisé en ce que** le tronçon de soutien (34) est agencé sur la lèvre de fond (30).

4. Profilé d'étanchéité (10) selon la revendication 3, **caractérisé en ce que** le tronçon de soutien (34) est adjacent au premier tronçon formant came (35) sur le côté détourné de la surface de contact (33).

5. Profilé d'étanchéité (10) selon l'une des revendications 1 à 4, **caractérisé en ce que** la surface de contact (33) est incurvée de manière concave.

6. Profilé d'étanchéité (10) selon l'une des revendications 1 à 5, **caractérisé en ce que** la lèvre de fond (30) comprend un second tronçon formant came (36), qui est adjacent à la surface de contact (33) et sur lequel est agencé l'extrémité (31, 32), détournée du premier tronçon formant came (35), de la lèvre de fond (30).

7. Profilé d'étanchéité (10) selon l'une des revendications 1 à 6, **caractérisé en ce que** la surface de contact (33) est réalisée rugueuse ou avec un revêtement, ou encore en un matériau de friction, afin de maintenir la surface frontale (113) de la vitre de fenêtre (110) additionnellement par coopération de forces.

8. Profilé d'étanchéité (10) selon l'une des revendications 1 à 7, **caractérisé par** une première lèvre d'étanchéité (41), qui est agencée sur la première branche (21), et par une seconde lèvre d'étanchéité (42), qui est agencée sur la seconde branche (22).

9. Profilé d'étanchéité (10) selon la revendication 8, **caractérisé en ce que** la première lèvre d'étanchéité (41) comprend un premier tronçon d'étanchéité (43), réalisé de préférence de manière à réduire la friction ou avec un flocage, qui peut être appliqué contre la première surface latérale (111), et/ou
la seconde lèvre d'étanchéité (42) comprend un second tronçon d'étanchéité (44), réalisé de préférence de manière à réduire la friction ou avec un flocage, qui peut être appliqué contre la seconde surface latérale (112).

10. Profilé d'étanchéité (10) selon l'une des revendications 1 à 9, **caractérisé en ce que** le profilé d'étanchéité (10) est fabriqué en élastomère, de préférence un élastomère thermoplastique ou un caoutchouc éthylène-propylène-diène, de préférence par extrusion.

11. Profilé d'étanchéité (10) selon l'une des revendications 1 à 10, **caractérisé par** un élément décoratif (50), qui est agencé sur la première ou sur la seconde branche (21, 22), et qui est fabriqué de préférence en métal, en aluminium ou un alliage d'aluminium.
